# EUROPEAN PATENT SPECIFICATION

(11) **EP 0 955 097 B1**
(45) Date of publication and mention of the grant of the patent: **06.10.2004**
(21) Application number: 98810400.6
(22) Date of filing: 04.05.1998
(51) Int. Cl.: B01L 7/00, G01N 35/02, B01L 3/00, C12M 1/00

(54) **Thermal cycler having an automatically positionable cover**
Thermozyklierapparat mit einem automatisch positionierbaren Deckel
Dispositif de cycles thermiques avec positionnement automatique du couvercle

(43) Date of publication of application: 10.11.1999
(73) Proprietor: F. HOFFMANN-LA ROCHE AG, 4070 Basel (CH)
(72) Inventor: Schneebeli, Rolf, 8932 Mettmenstetten (CH)
(74) Representative: Ventocilla, Abraham

(56) References cited:
- EP-A- 0 311 440
- EP-A- 0 628 823
- EP-A- 0 810 030
- US-A- 5 282 543
- US-A- 5 496 518
- US-A- 5 556 958
- US-A- 5 616 301

## Description

The invention concerns a thermal cycler for performing amplification of nucleic acids, e.g. by means of a polymerase chain reaction (PCR).

Known thermal cyclers of the above mentioned type have a heated lid which is positioned manually to cover a plurality of reaction vessels positioned in chambers of a thermal block of the thermal cycler during thermal cycling of sample-reaction-mixtures contained in said reaction vessels. The lid is also manually removed in order to have access to the reaction vessel after the end of their thermal cycling. Known lids of the latter type have two main disadvantages. They are not suitable for automatic change of their position with respect to the thermal block.

The document EP-A-0810030 describes a thermal cycler with or horizontally slidable cover.

A main aim of the invention is therefore to provide a thermal cycler comprising a heated lid which is automatically positionable to cover and uncover a plurality of reaction vessels positioned in chambers of a thermal block of the thermal cycler, said heated lid being in addition suitable to ensure that when said reaction vessels are covered by said heated lid no external light can reach the interior of the reaction vessels.

According to the invention such an aim is attained with a thermal cycler having the features defined by claim 1.

With a thermal cycler according to the invention the main aim indicated above is attained. In addition the construction of the lid and of the mechanism for moving it makes it suitable for obtaining optimum results with regard to both suitable heating effect on the reaction vessels and with regard to automatic processing thereof.

Preferred embodiments of the thermal cycler according to the invention are defined by the dependent claims of the instant application.

A preferred embodiment of the invention is described hereinafter with reference to the enclosed drawings, wherein
Fig. 1 shows a perspective, cross-sectional view of a thermal cycler according to the invention, wherein a movable lid 14 is at a first position, at which the lid covers a thermal block 71 and reaction vessels 13 positioned in chambers 72 of thermal block 71.
Fig. 2 shows a cross-sectional view of the thermal cycler represented in Fig. 1.
Fig. 3 shows a perspective exploded view showing parts of the thermal cycler represented in Fig. 1.
Fig. 4 shows a first schematic perspective view of the movable lid 14 represented in Fig. 1 and of parts of the transport means for moving said lid.
Fig. 5 shows a perspective view, partially in cross-section, of the thermal cycler represented in Fig. 1, wherein the movable lid is at a second position, at which it does not cover said thermal block.
Fig. 6 shows a cross-sectional view of the thermal cycler represented in Fig. 5.
Fig. 7 shows a perspective view, partially in cross-section, of the thermal cycler represented in Fig. 1, wherein the movable lid 14 is at an intermediate position between a first position, at which the lid covers thermal block 71 and reaction vessels 13 positioned in chambers 72 thereof, and a second position, at which lid 14 does not cover thermal block 71.
Fig. 8 shows a cross-sectional view of the thermal cycler represented in Fig. 7.
Fig. 9 shows a perspective view, partially in cross-section, of the thermal cycler represented in Fig. 1, wherein the movable lid is a position where ejector means begin to remove the reaction vessels from their position in the chambers of the thermal block of the thermal cycler.
Fig. 10 shows a cross-sectional view of the thermal cycler represented in Fig. 9.

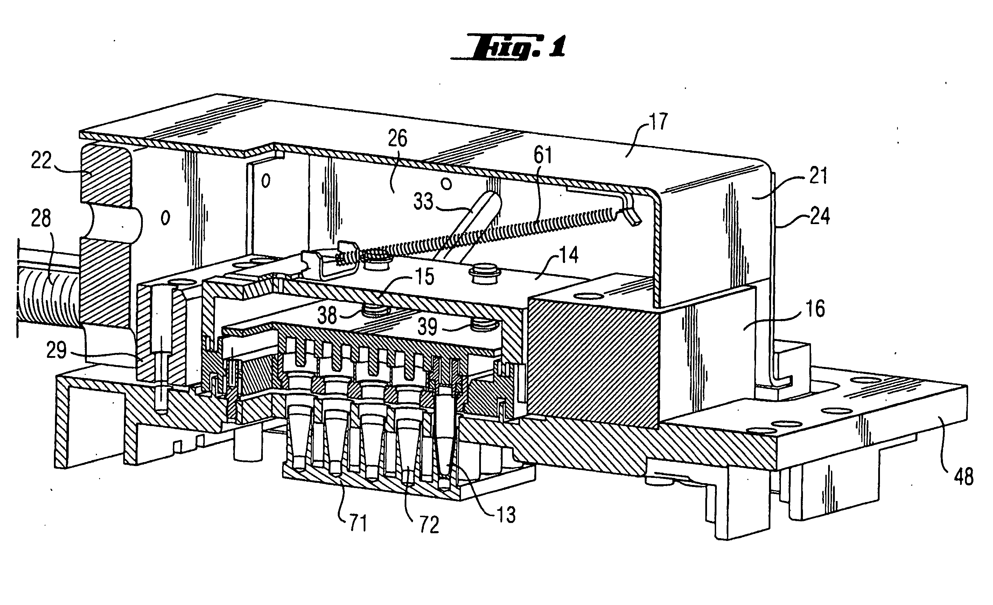

As shown by Fig. 1 an embodiment of a thermal cycler according to the invention comprises a metallic thermal block 71 mounted on a base 48, a movable lid 14, and transport means for moving lid 14. Such a thermal cycler is suitable for performing amplification of nucleic acids. For this purpose reaction vessels 13 containing suitable sample-reagent mixtures and closed by caps are positioned on thermal block 71. The reaction vessels 13 and their caps are preferably of suitable plastic materials.

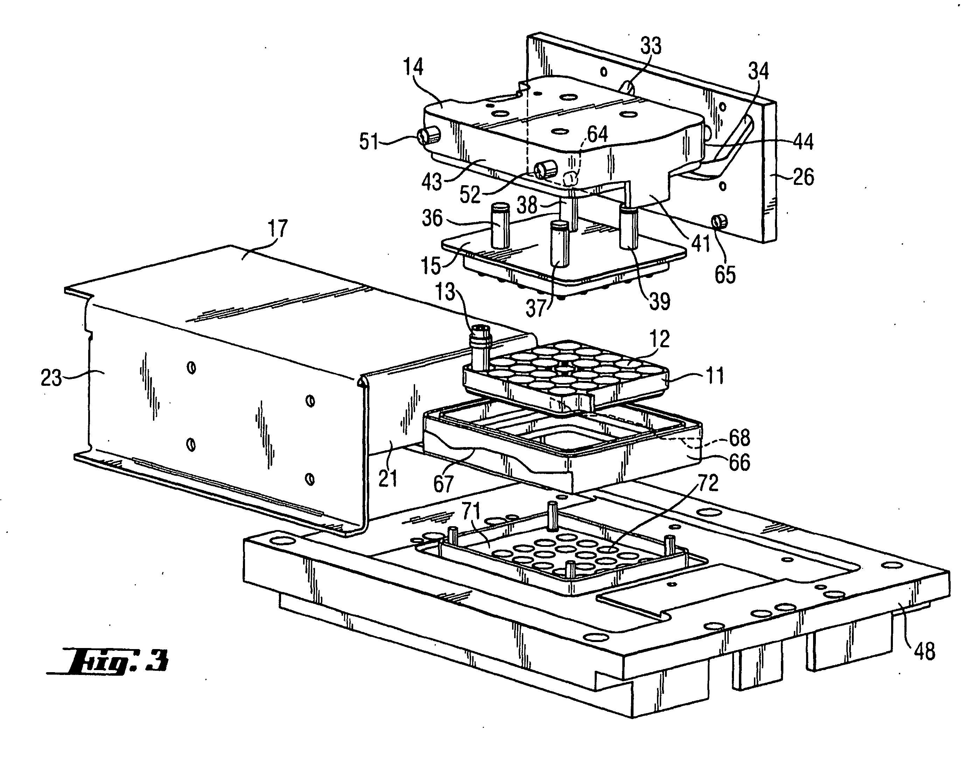

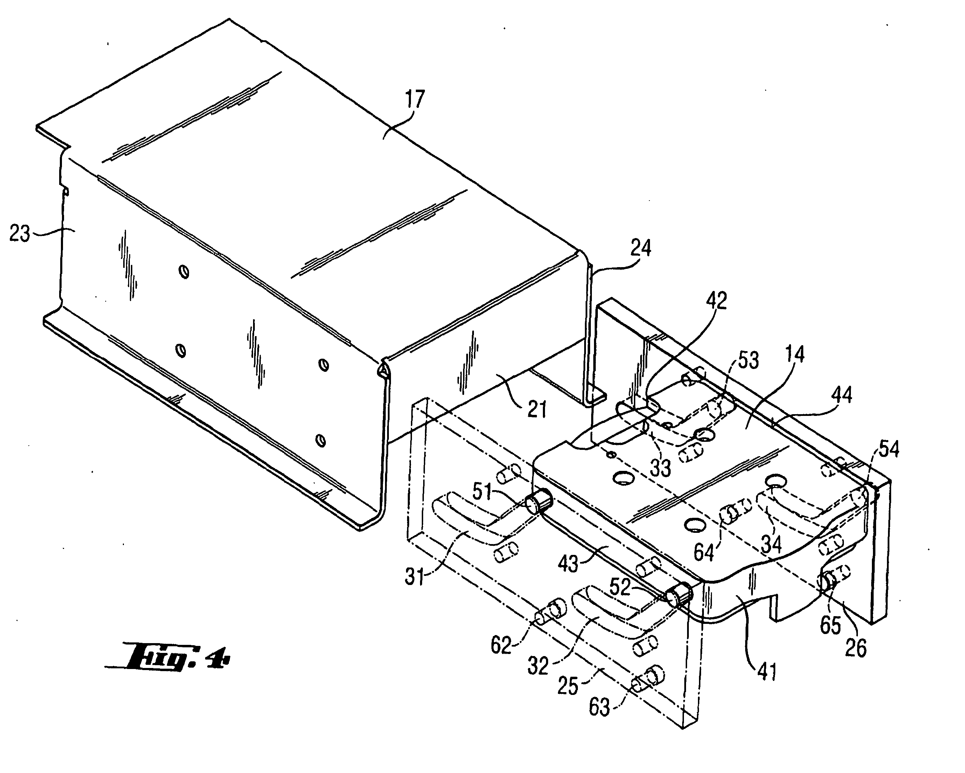

The main features of the structure of the thermal cycler represented in Fig. 1 are now described in particular with reference to Figures 1 to 4.

Movable lid 14 has heating means 15 which are positioned within an inner space of lid 14, which inner space is limited by top and side walls of lid 14. Heating means 15 are mechanically connected with lid 14, this mechanical connection comprises pusher springs 36, 37, 38, 39.

Thermal block 71 has a plurality of chambers 72 each of which is apt to receive the lower part of a reaction vessel 13.

Lid 14 is positionable at a first position (lid closed), at which it covers thermal block 71 and reaction vessels positioned in said chambers 72 thereof, and at a second position (lid open), at which lid 14 does not cover said thermal block 71 and reaction vessels positioned in said chambers 72 thereof.

Lid 14 has a surface which is apt to cover said thermal block 71 and reaction vessels 13 positioned in chambers 72 thereof when lid 14 is in the above mentioned first position (lid closed). When lid 14 is in this position it fully shields reaction vessels 13 from light in the environment of the thermal cycler, which light should not interfere with measurement of fluorescence light emitted by sample-reagent-mixtures contained in reaction vessels 13.

The transport means for moving lid 14 from the first position (lid closed) to the second position (lid open) and viceversa are so configured and dimensioned that the path followed by lid 14 as it is moved by the transport means from the second position (lid open) to the first position (lid closed) comprises the following path segments:
a first path segment which lies above and at a predetermined distance from thermal block 71 and along which said lid 14 is moved towards a stopper 16 until it abuts against stopper 16, and
a second path segment along which said lid 14 is moved downwards until it is vertically aligned with said thermal block 71 and exerts a predetermined pressure on reaction vessels 13 positioned in chambers 72 of thermal block 71.

The transport means for moving lid 14 comprise in particular the following components:
- stopper 16 positioned in the above mentioned first path segment of the movement of the lid 14,
- a motor driven lid carrier 17, and
- plates 25, 26 mounted on the inner surface of side walls 23 of lid carrier 17.

Stopper 16 is mounted on base 48 and has a plane surface 18 which is substantially perpendicular to the above mentioned first path segment.

Lid carrier 17 has a front end wall 21 which is substantially in face of plane surface 18 of stopper 16, a rear end wall 22, and side walls 23, 24 extending between said front and rear walls 21, 22. Lid carrier 17 has means for holding the lid 14 within it when the lid 14 is in said first position.

The transport means for moving lid 14 further comprise a motor driven spindle 28 for moving rear wall 22 of lid carrier 17 and thereby lid carrier 17 along the longitudinal axis of spindle 28 in both senses, that is towards and away from stopper 16, a spindle bearing 29 mounted on base 48, and means (not shown) for controlling the operation of the motor (not shown) which drives spindle 28.

Plate 25 is fixed on the inner surface of a the side wall 23 of lid carrier 17 and plate 26 is fixed on the inner surface of the other side wall 24 of lid carrier 17. Each of plates 25, 26 has a pair of guiding slots 31, 32 respectively 33, 34 for guiding the movement of lid 14 along the above mentioned second path segment.

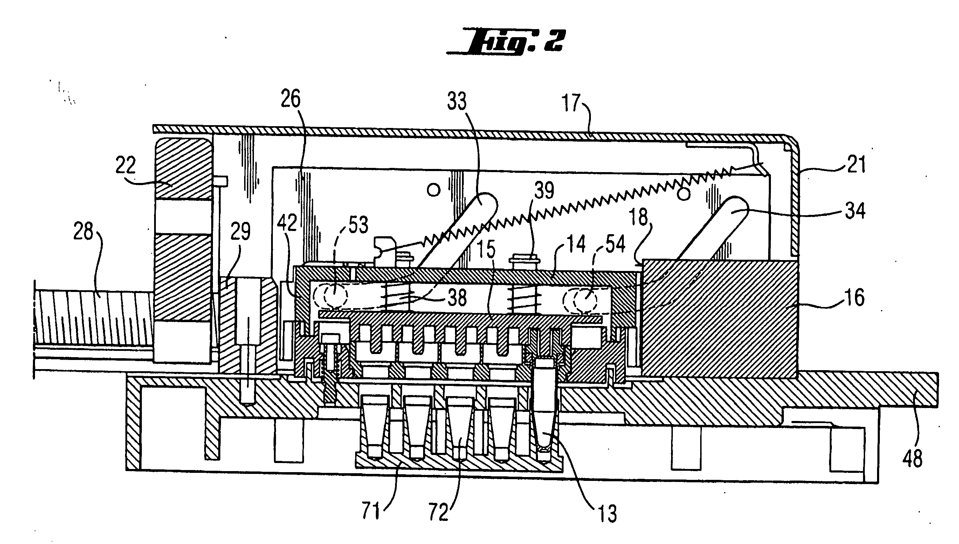

As shown in particular by Figures 2, 3 and 4, lid 14 has an inner and an outer top surface, a front end wall 41 which is substantially in face of plane surface 18 of said stopper 16, a rear end wall 42, and side walls 43, 44 extending between said front and rear walls and parallel to the side walls 23, 24 of said lid carrier 17. The side walls of lid 14 include outwards projecting pins 51, 52, 53, 54 which are apt to fit into and to slide in guiding slots 31, 32 of plate 25, and guiding slots 33, 34 of plate 26, respectively.

In a preferred embodiment the transport means for moving lid 14 further comprise a tension spring 61 one end of which is attached to the front end of the inner top surface of lid carrier 17, whereas the other end of spring 61 is attached to the rear part of the top surface of the lid 14.

The operation of the above described transport means for moving lid 14 is as follows:

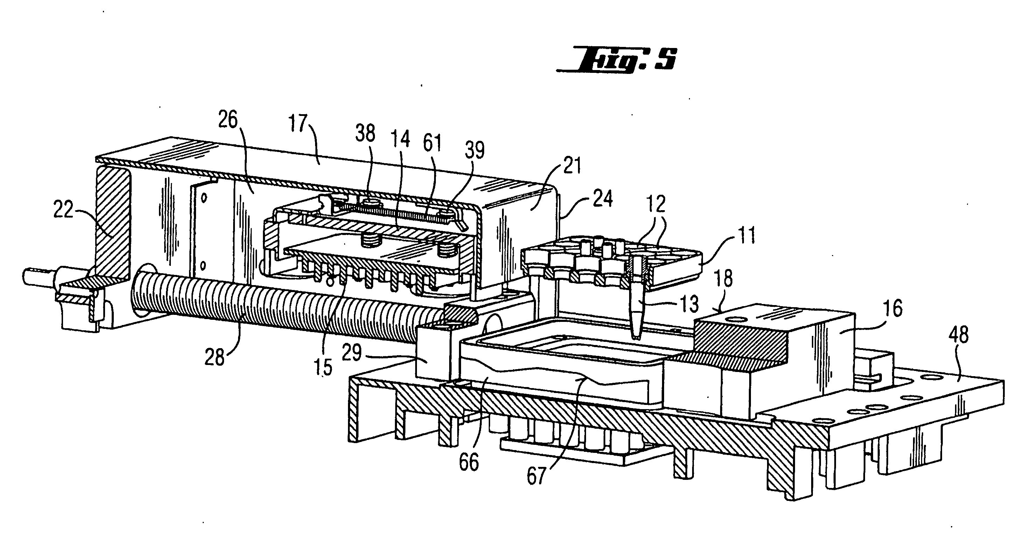

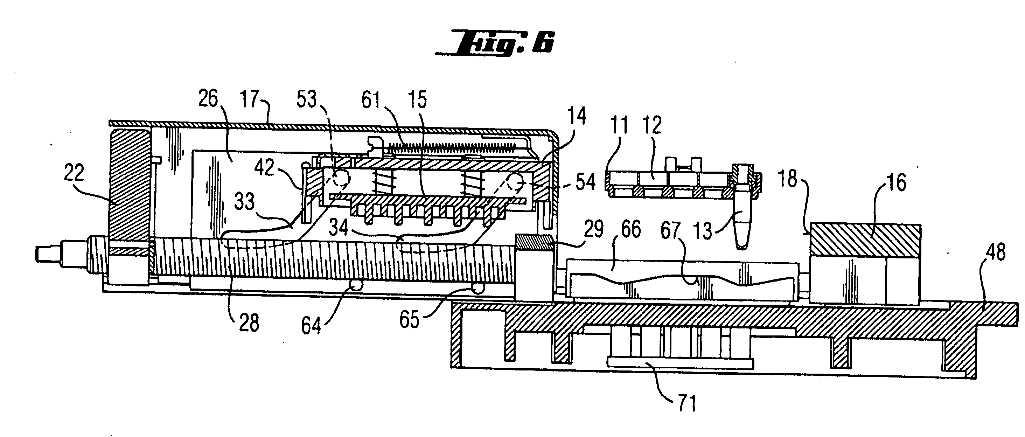

Figures 5 and 6 show the position of lid carrier 17 when lid 14 is in the above mentioned second position (lid open). When lid 14 and lid carrier 17 are positioned as shown by figures 5 and 6 a reaction tube holder 11 having a plurality of apertures 12 and carrying a plurality of reaction vessels 13 inserted through those apertures can be positioned on thermal block 71 so that the lower part of each reaction vessel 13 fits into a chamber 72 of thermal block 71.

After positioning of the reaction vessels 13 on thermal block 71, motion of lid 14 from its second position (lid open) to its first position (lid closed) is initiated by horizontal displacement of lid carrier 17 towards stopper 16 by rotation of spindle 28 in a first sense. In this way lid 14 is moved horizontally towards stopper 16 until front end wall 41 of lid 14 abuts against plane surface 18 of stopper 16. After this point of the movement of lid 14, and since lid 14 cannot move further in horizontal direction further displacement of lid carrier 17 in the sense towards stopper 16 causes a downwards and backwards displacement of lid 14 away from the top wall of lid carrier 17. During this displacement of lid 14 tension spring 61 is stretched and the movement of lid 14 is guided by sliding of pins 51, 52 and 53, 54 along guiding slots 31, 32 and 33, 34 respectively. Lid 14 is displaced in this sense until heating means 15 carried by lid 14 abut on the caps of reaction vessels 13 and exert on these caps a predetermined pressure. At this point lid 14 has reached its first position (lid closed) represented in Figures 1 and 2.

The predetermined pressure exerted by heating means 15 on the caps of reaction vessels 13 when lid 14 is at its first position (lid closed) is determined by the last part of the downwards displacement of lid 14 guided by the lower part of slots 31, 32 and 33, 34 and also by the mechanical characteristics of pusher springs 36 to 39.

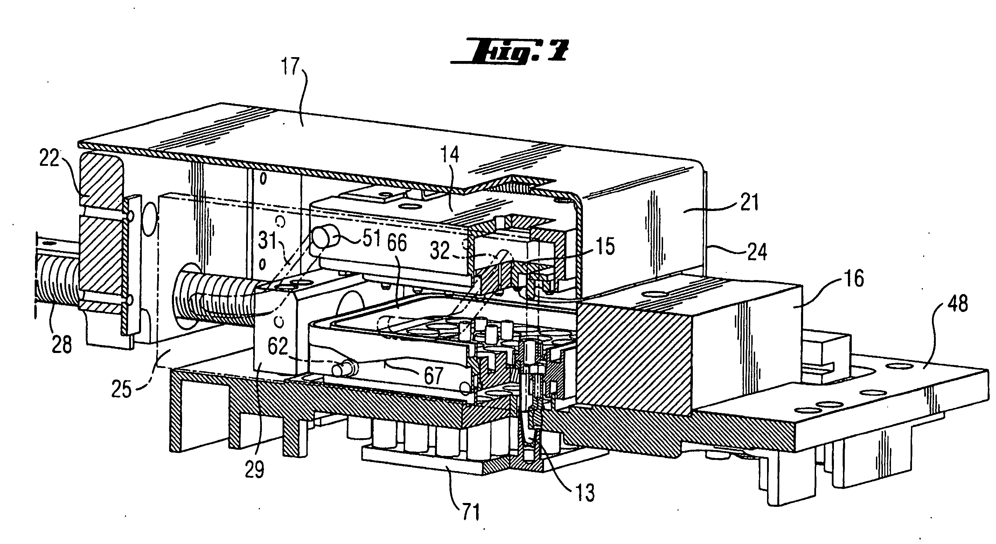

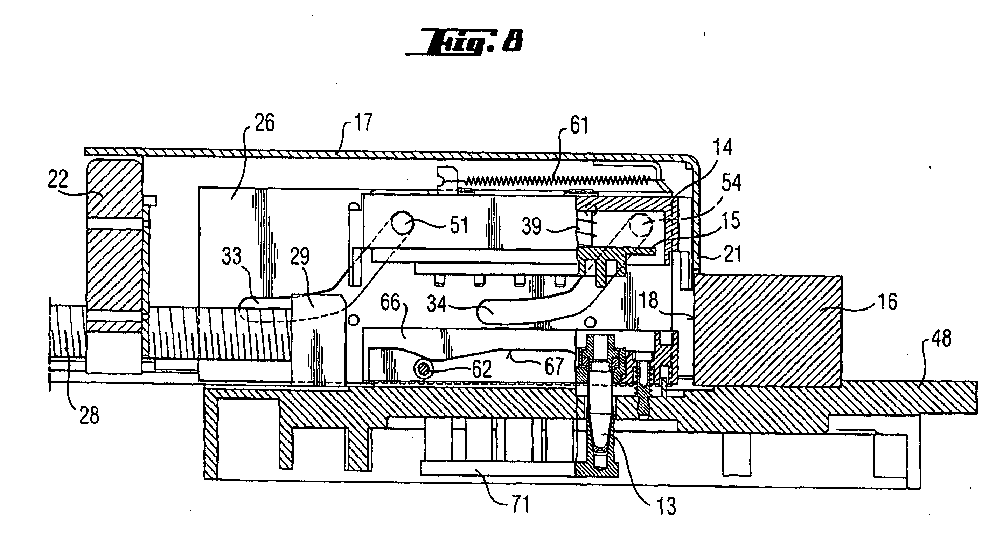

Figures 7 and 8 illustrate the position of lid carrier 17 and other related parts of the transport system for moving lid 14, at the point of time where front end wall 41 of lid 14 abuts against plane surface 18 of stopper 16, that it at the point where the direction of the motion of lid 14 changes from an horizontal motion towards stopper 16 to a downward motion.

To bring lid 14 from its first position (lid closed) to its second position (lid open) lid carrier 17 is moved away from stopper 16 by rotation of spindle 28 in a second sense opposite to the first. This causes motion of lid 14 along the same path described above, but in the reverse sense. Pulled by tension spring 61 and guided by slots 31, 32 and 33, 34 lid 14 moves initially upwards towards the top wall of lid carrier 17 and towards stopper 16 until lid 14 is again within lid carrier 17 and close to the top wall thereof. After that lid 14 moves with lid carrier 17 further away from stopper 16 until lid 14 and lid carrier 17 reach their positions shown by figures 5 and 6.

In a further preferred embodiment the transport means for moving lid 14 further comprise ejector means 62, 63, 64, 65, 66, 67 for separating or removing the lower part of reaction vessels 13 from the chambers 72 of thermal block 71 when the transport means move the lid 14 from said second position to said first position. The need for such ejector means arises from the fact that at the end of a thermal cycling process the lower parts of reaction vessels 13 tend to remain stuck in the chambers 72 of thermal block 71.

The above mentioned ejector means comprise an ejector frame 66 which is apt to receive reaction vessel holder 11 and which is arranged between the latter holder and thermal block 71. Ejector frame 66 has on the outer surface of its side walls ramp guides 67, 68 which enter into contact with inwards projecting pins 62, 63 and 65, 66 of plates 25, 26 when lid carrier 17 is moved to bring lid 14 from its first position (lid closed) to its second position (lid open).

The operation of the above described ejection means for separating reaction vessels 13 from the chambers 72 of thermal block 71 is as follows:

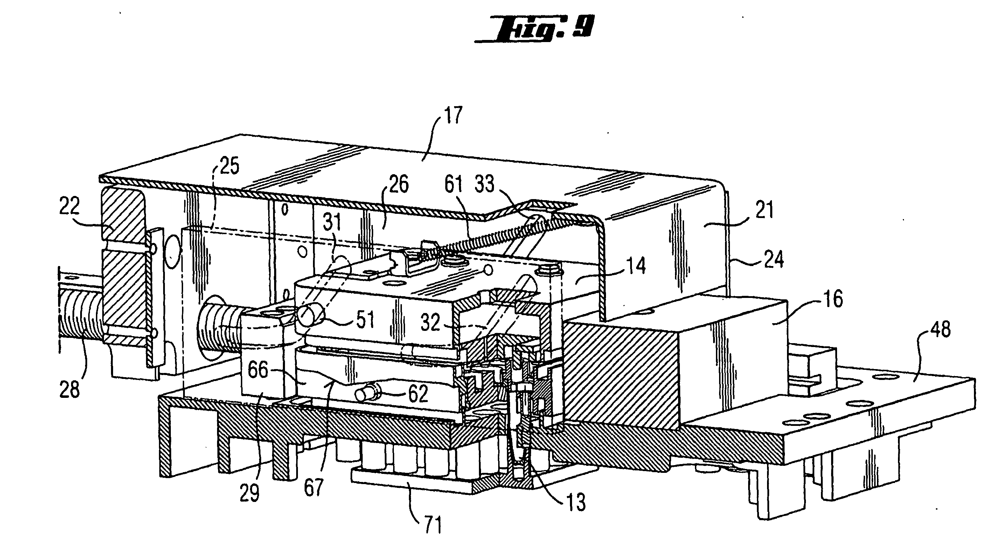

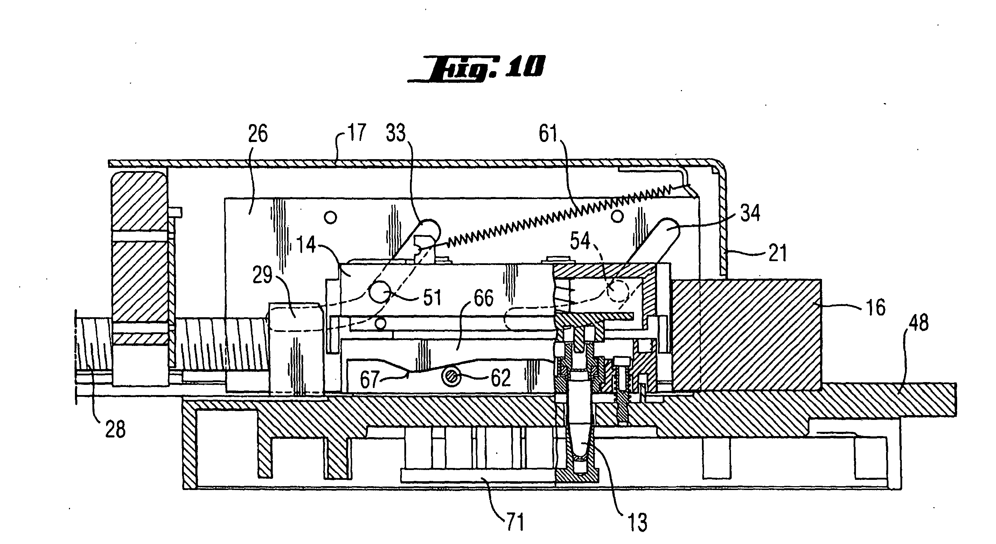

During the vertical upwards movement of lid 14 as it is moved from its first position (lid closed) to its second position (lid open), relative movement of plates 25, 26 and of pins 62 to 65 which belong to them brings this pins into contact with ramp guides 67, 68 of ejector frame 66. As represented in particular in figures 9 and 10, the shape of ramp guides 67, 68 is such that the relative movement mentioned causes pins 62 to 65 to push ejector frame 66 and reaction vessel holder 11 which is positioned on frame 66 upwards, and this causes removal of the lower parts of reaction vessels 13 from the chambers 72 of thermal block 71.

## Claims

1. A thermal cycler for performing amplification of nucleic acids, said thermal cycler comprising
(a) a thermal block (71) having a plurality of chambers (72) each of which is apt to receive the lower part of a reaction vessel (13);
(b) a movable lid (14) having heating means (15) positioned within it, said lid (14) having a surface apt to cover said thermal block (71) and reaction vessels (13) positioned in said chambers (72) thereof so that said lid (14) fully shields said vessels (13) from light in the environment of the thermal cycler, said lid (14) being positionable at a first position, at which it covers said thermal block (71) and reaction vessels positioned in said chambers (72) thereof, and at a second position, at which said lid (14) does not cover said thermal block (71) and reaction vessels positioned in said chambers (72) thereof, and;
(c) transport means for moving said lid (14) from said first position to said second position and viceversa, the path followed by the lid (14) as it is moved from said second position to said first position comprising
a first path segment which lies above and at a predetermined distance from said thermal block (71) and along which said lid (14) is moved towards a stopper (16) until it abuts against said stopper, and
a second path segment along which said lid (14) is moved downwards until it is vertically aligned with said thermal block (71) and exerts a predetermined pressure on reaction vessels (13) positioned in said chambers (72) of said thermal block.

2. A thermal cycler according to claim 1,
wherein said transport means comprises
- said stopper (16) positioned in said first path segment of movement of the lid (14), said stopper (16) having a plane surface (18) which is substantially perpendicular to the said first path
- a motor driven lid carrier (17) which has a front end wall (21) which is substantially in face of said plane surface of said stopper, a rear end wall (22), and side walls (23, 24) extending between said front and rear walls (21, 22), said lid carrier (17) having means for holding the lid (14) within it when the lid (14) is in said first position,
- a first plate (25) fixed on the inner surface of a side wall (23) of said lid carrier and a second plate (26) fixed on the inner surface of the other side wall (24) of said lid carrier (17), each of said first and second plates (25, 26) having a pair of guiding slots (31, 32 respectively 33, 34) for guiding the movement of the lid (14) along said second path segment.

3. A thermal cycler according to claim 2,
wherein said lid (14) has an inner and an outer top surface, a front end wall (41) which is substantially in face of said plane surface (18) of said stopper(16), a rear end wall (42), and side walls (43, 44) extending between said front and rear walls and parallel to the side walls (23, 24) of said lid carrier (17), said side walls of the lid (14) including outwards projecting pins (51, 52, 53, 54) which are apt to fit into and to slide in said guiding slots (31, 32 respectively 33, 34).

4. A thermal cycler according to claim 3, wherein said transport means further include a tension spring (61) one end of which is attached to the front end of the inner top surface of said lid carrier (17), whereas the other end of said spring (61) is attached to the rear part of said top surface of the lid (14).

5. A thermal cycler according to any of the preceding claims, wherein said transport means further includes ejector means (62, 63, 64, 65, 66, 67) for removing the lower part of reaction vessels (13) from said chambers (72) of said thermal block (71) when the transport means move the lid (14) from said second position to said first position.

## Patentansprüche

1. Thermozyklierapparat zum Durchführen einer Amplifikation von Nukleinsäuren, umfassend:
a) einen Thermoblock (71), der eine Mehrzahl von Kammern (72) hat, die jeweils den unteren Teil eines Reaktionsgefäßes (13) aufnehmen können;
b) einen beweglichen Deckel (14), in dem eine Heizeinrichtung (15) angeordnet ist, wobei der Deckel (14) eine Fläche hat, die dafür ausgelegt ist, den Thermoblock (71) und in dessen Kammern (72) angeordnete Reaktionsgefäße (13) so abzudecken, daß der Deckel (14) die Gefäße (13) vollständig vor Licht aus der Umgebung des Thermozyklierapparates abschirmt, wobei der Deckel in einer ersten Position, in der er den Thermoblock und in dessen Kammern (72) angeordnete Reaktionsgefäße bedeckt, und in einer zweiten Position, in der der Deckel (14) den Thermoblock (71) und in dessen Kammern (72) angeordnete Reaktionsgefäße nicht bedeckt, positionierbar ist, und;
c) Transportmittel, um den Deckel (14) zwischen der ersten Position und der zweiten Position hin und her zu bewegen, wobei der Deckel (14) aus der zweiten Position in die erste Position entlang eines Weges bewegt wird,
der einen ersten Wegabschnitt umfaßt, der oberhalb und in einem vorgegebenen Abstand von dem Thermoblock (71) verläuft und entlang dem der Deckel (14) auf einen Anschlag (16) zubewegt wird, bis er an den Anschlag anstößt, und
der einen zweiten Wegabschnitt umfaßt, entlang dem der Deckel (14) nach unten bewegt wird, bis er zu dem Thermoblock hinsichtlich der Vertikalen ausgerichtet ist und auf in den Kammern (72) des Thermoblocks angeordnete Reaktionsgefäße einen vorgegebenen Druck ausübt.

2. Thermozyklierapparat nach Anspruch 1, bei welchem die Transportmittel umfassen:
- den Anschlag (16), der in dem ersten Wegabschnitt der Bewegung des Deckels (14) angeordnet ist, wobei der Anschlag (16) eine ebene Fläche (18) hat, die im wesentlichen senkrecht zu dem ersten Wegabschnitt ausgerichtet ist,
- einen motorgetriebenen Deckelträger (17) mit einer Vorderwand (21), die im wesentlichen gemäß der ebenen Fläche des Anschlags ausgerichtet ist, einer Rückwand (22) und Seitenwänden (23,24), die sich zwischen der Vorderwand (21) und der Rückwand (22) erstrecken, wobei der Deckelträger (17) Mittel aufweist, um den Deckel (14) in sich zu halten, wenn sich der Deckel (14) in der ersten Position befindet,
- eine erste Platte (25), die an der Innenseite einer Seitenwand (23) des Deckelträgers befestigt ist, und eine zweite Platte (26), die an der Innenseite der anderen Seitenwand (24) des Deckelträgers (17) befestigt ist, wobei die erste und die zweite Platte (25,26) jeweils ein Paar Führungsschlitze (31,32 bzw. 33,34) haben, um die Bewegung des Deckels (14) entlang des zweiten Wegabschnitts zu führen.

3. Thermozyklierapparat nach Anspruch 2, bei welchem der Deckel (14) eine innere und eine äußere Oberseite, eine Vorderwand (41), die im wesentlichen gemäß der ebenen Fläche (18) des Anschlags (16) ausgerichtet ist, eine Rückwand (42) und Seitenwände (43,44) hat, die sich zwischen Vorder- und Rückwand parallel zu den Seitenwänden (23,24) des Deckelträgers (17) erstrecken, wobei die Seitenwände des Deckels (14) auswärts gerichtete Stifte (51,52,53,54) haben, die in die Führungsschlitze (31,32 bzw. 33,34) passen und darin gleiten können.

4. Thermozyklierapparat nach Anspruch 3, bei welchem zu den Transportmitteln zusätzlich eine Zugfeder (61) gehört, die mit einem Ende an dem Vorderende der inneren Oberseite des Deckelträgers (17) und mit ihrem anderen Ende im hinteren Bereich der Oberseite des Deckels (14) befestigt ist.

5. Thermozyklierapparat nach einem der vorhergehenden Ansprüche, bei welchem zu den Transportmitteln zusätzlich Auswurfmittel (62,63,64,65,66,67) gehören, um den unteren Teil der Reaktionsgefäße (13) aus den Kammern (72) des Thermoblocks (71) zu entfernen, wenn die Transportmittel den Deckel (14) aus der zweiten Position in die erste Position bewegen.

## Revendications

1. Dispositif de cycles thermiques pour effectuer l'amplification des acides nucléiques, ledit dispositif de cycles thermiques comprenant
(a) un bloc thermique (71) ayant une pluralité de chambres (72) dont chacune est appropriée pour recevoir la partie inférieure d'un réacteur (13) ;
(b) un couvercle mobile (14) ayant un moyen de chauffage (15) positionné à l'intérieur de celui-ci, ledit couvercle (14) ayant une surface appropriée pour recouvrir ledit bloc thermique (71) et les réacteurs (13) positionnés dans lesdites chambres (72) de sorte que ledit couvercle (14) protège entièrement lesdits réacteurs (13) de la lumière dans l'environnement du dispositif de cycles thermiques, ledit couvercle (14) pouvant être positionné dans une première position, dans laquelle il recouvre ledit bloc thermique (71) et les réacteurs positionnés dans lesdites chambres (72), et dans une seconde position, dans laquelle ledit couvercle (14) ne recouvre pas ledit bloc thermique (71) et les réacteurs positionnés dans lesdites chambres (72), et ;
(c) un moyen de transport pour déplacer ledit couvercle (14) de ladite première position à ladite seconde position et vice versa, le chemin suivi par le couvercle (14) lorsqu'il est déplacé de ladite seconde position à ladite première position comprenant
un premier segment de chemin qui se situe au-dessus et à une distance prédéterminée dudit bloc thermique (71) et le long duquel ledit couvercle (14) est déplacé vers un butoir (16) jusqu'à ce qu'il vienne buter contre ledit butoir, et
un second segment de chemin le long duquel ledit couvercle (14) est déplacé vers le bas jusqu'à ce qu'il soit aligné verticalement avec ledit bloc thermique (71) et exerce une pression prédéterminée sur les réacteurs (13) positionnés dans lesdites chambres (72) dudit bloc thermique.

2. Dispositif de cycles thermiques selon la revendication 1,
dans lequel ledit moyen de transport comprend
- ledit butoir (16) positionné dans ledit premier segment de chemin de mouvement du couvercle (14), ledit butoir (16) ayant une surface plane (18) qui est sensiblement perpendiculaire audit premier chemin
- un support de couvercle à moteur (17) qui a une paroi d'extrémité avant (21) qui est sensiblement en face de ladite surface plane dudit butoir, une paroi d'extrémité arrière (22), et des parois latérales (23, 24) s'étendant entre lesdites parois avant et arrière (21, 22), ledit support de couvercle (17) ayant un moyen pour maintenir le couvercle (14) à l'intérieur de celui-ci lorsque le couvercle (14) est dans ladite première position,
une première plaque (25) fixée sur la surface intérieure d'une paroi latérale (23) dudit support de couvercle et une seconde plaque (26) fixée sur la surface intérieure de l'autre paroi latérale (24) dudit support de couvercle (17), chacune desdites première et seconde plaques (25, 26) ayant une paire de fentes de guidage (31, 32 respectivement 33, 34) pour guider le mouvement du couvercle (14) le long dudit second segment de chemin.

3. Dispositif de cycles thermiques selon la revendication 2,
dans lequel ledit couvercle (14) a une surface supérieure intérieure et extérieure, une paroi d'extrémité avant (41) qui est sensiblement en face de ladite surface plane (18) dudit butoir (16), une paroi d'extrémité arrière (42), et des parois latérales (43, 44) s'étendant entre lesdites parois avant et arrière et parallèlement aux parois latérales (23, 24) dudit support de couvercle (17), lesdites parois latérales du couvercle (14) comprenant des goupilles faisant saillie vers l'extérieur (51, 52, 53, 54) qui sont appropriées pour s'insérer et glisser dans lesdites fentes de guidage (31, 32 respectivement 33, 34).

4. Dispositif de cycles thermiques selon la revendication 3, dans lequel ledit moyen de transport comprend en outre un ressort de tension (61) dont une extrémité est reliée à l'extrémité avant de la surface supérieure intérieure dudit support de couvercle (17), tandis que l'autre extrémité dudit ressort (61) est reliée à la partie arrière de ladite surface supérieure du couvercle (14).

5. Dispositif de cycles thermiques selon l'une quelconque des revendications précédentes, dans lequel ledit moyen de transport comprend en outre des moyens d'éjection (62, 63, 64, 65, 66, 67) pour retirer la partie inférieure des réacteurs (13) desdites chambres (72) dudit bloc thermique (71) lorsque le moyen de transport déplace le couvercle (14) de ladite seconde position à ladite première position.
